# EUROPEAN PATENT APPLICATION

(11) **EP 4 279 474 A1**
(43) Date of publication of application: **22.11.2023**
(21) Application number: 22173542.6
(22) Date of filing: 16.05.2022
(51) Int. Cl.: C05F 1/00, C05C 9/00, C05F 11/10, C05G 5/23

(54) **FERTILISER AND/OR SOIL IMPROVER COMPOSITION, METHOD OF PREPARATION AND METHOD OF USE**

(71) Applicant: Veratin Limited, O'Connor WA 6163 (AU)
(72) Inventor: BOULOS, Ramiz, O'CONNOR, 6163 (AU); SIMPSON, Peter, O'CONNOR, 6163 (AU)
(74) Representative: Aronova

(57) **Abstract**

The present invention relates to a fertiliser and/or soil improver composition for use in enhancing the growth of plants, the composition comprising one or more organic sources of plant nutrient(s), obtained through deconstruction of one or more biological materials by a eutectic melt. The present invention also relates to a method of preparing a fertilizer and/or soil improver composition according to the present invention, and a method of enhancing plant growth using a fertilizer and/or soil improver composition according to the present invention.

## Description

### FIELD OF THE INVENTION

The present invention relates to a fertiliser and/or soil improver composition. More specifically, the present invention relates to one or more organic sources of plant nutrient(s), for use in a fertiliser and/or soil improver composition. The present invention also relates to a method of preparation and method of use of the fertiliser and/or soil improver composition.

### BACKGROUND

Fertilisers and soil improvers are commonly used in the agricultural industry and even by home gardeners, and indeed fertilisers and soil improvers have many applications and uses between the two. The growth of plants can be enhanced with the use of fertilisers by providing nutrients for uptake by the plant and/or with the use of soil improvers by enhancing the effectiveness of the soil in which the plant grows. The nutritional aspect of fertilisers and soil improvers can involve the provision of one or more of the three main macronutrients, nitrogen (N), phosphorus (P) and potassium (K), for various growth enhancement activity.

Most common fertilisers and soil improvers are synthetic or inorganic. Usually, various chemical treatments and high energy input are required for their manufacture, which can be costly and has direct environmental impacts. Inorganic fertilisers may also acidify the soil with long term use. However, inorganic fertilisers and soil improvers commonly achieve greater results when applied to plants and soil, compared with natural or organic fertilisers and soil improvers. Therefore, whilst organic fertilisers and soil improvers are often favoured, for myriad reasons, not the least of which include environmental concerns, there exists the need to identify new, effective, organic (or organic sources of) fertilisers and soil improvers.

Traditionally, nitrogen, the most important plant nutrient, although naturally occurs in soil, is commonly supplied through applications of inorganic fertilisers, as proteins (being a possible organic nitrogen source) was not considered directly available to plants. Rather, the view was that plants relied on microbes and soil fauna for the breakdown of the organic material first in order to utilise the nitrogen bound in the organic material. However, it has recently been shown that roots are able to directly access protein, likely through either enzymatic digestion using proteolytic enzymes exuded from the plant's own roots or through root uptake via endocytosis (see PNAS, 2008, 105:11, 4524).

There are abundant natural sources of protein in the environment, including in natural waste materials such as wool, feature or other animal components that are not suitable for use or consumption. It is desirable to repurpose such natural waste materials to reduce wastage and environmental impacts. However, it is difficult to break down the protein structures contained in such materials, to render it economically viable to repurpose such materials.

The present invention attempts to overcome at least in part the aforementioned disadvantages and challenges in providing fertilisers and soil improvers containing organic sources of plant nutrition element(s).

### SUMMARY OF THE INVENTION

In accordance with a first aspect of the present invention there is provided a fertiliser and/or soil improver composition for use in enhancing the growth of plants, the composition comprising one or more organic sources of plant nutrient(s), obtained through deconstruction of one or more biological materials by a eutectic melt.

In accordance with a second aspect of the present invention, there is provided a method of preparing a fertiliser and/or soil improver composition comprising one or more organic sources of plant nutrient(s), the method comprising the steps of:
a) forming a eutectic melt; and
b) deconstructing one or more biological materials using the eutectic melt, to obtain the one or more organic sources of plant nutrient(s).

The eutectic melt in the first or second aspect of the present invention comprises at least one hydrogen bond donor (HBD) and at least one hydrogen bond acceptor (HBA). Preferably, the at least one HBA is a quaternary ammonium salt, such as a choline salt (including a choline halide), and the at least one HBD is a urea, thiourea or a derivative thereof. In one preferred embodiment, the eutectic melt comprises a HBA in the form of a choline salt and a HBD in the form of a urea, thiourea, or a derivative of these. In a further preferred embodiment, the eutectic melt comprises a choline salt and a urea, or urea derivative.

In a preferred embodiment, the deconstruction of one or more biological materials by a eutectic melt in the first or second aspect of the present invention is at a temperature in a range of approximately: 135 - 170 °C, more preferably 140 - 165°C, or most preferably 145 - 160°C, or even 145 - 155 °C. The temperatures/temperature ranges in the present invention are measured at ambient pressure, or atmospheric pressure, conditions.

The molar ratio of the eutectic melt (between the at least one HBD and the at least one HBA) in the first or second aspect of the present invention may be from about 20:1 to about 1:20. In a preferred embodiment in which the eutectic solvent comprises a choline salt (as a HBA) and a urea, thiourea or a derivative these (as a HBD), the molar ratio of HBD:HBA is in a range of from 10:1 to 1:10; more preferably, from about 8:1 to about 3:1, or most preferably from about 7.5 to about 4:1 (e.g. with a HBD:HBA molar ratio of 7.5:1, 7:1, 6.6:1, 6:1, 5.4:1, 5:1, or 4.1:1). Therefore, in this preferred embodiment, the HBD (being a urea, thiourea or a derivative of these) is present at a significantly higher molar ratio than the HBA (the choline salt).

In a preferred embodiment, the one or more organic sources of plant nutrient(s) according to the first or second aspect of the present invention includes, or is in the form of, one or more biomolecules, preferably selected from the group consisting of proteins, peptides, chitins, amino acids, nucleic acids, and combinations thereof. In a further embodiment, the one or more biomolecules is selected from the group consisting of proteins, peptides, protein or peptide fragments/fractions, amino acids, and combinations thereof, as the, or the predominant, organic source(s) of nitrogen.

In a preferred embodiment, the one or more biomolecules in the first or second aspect of the present invention is obtained through deconstruction of one or more biological materials selected from the group consisting of wool, hair, feathers, horns, hooves, nails, skins, claws, beaks, and combinations thereof. The one or more biological materials may originate from a human, or an animal, source (e.g. the biological materials may be human hair, sheep wool and/or chicken feather). The one or more biomolecules obtained preferably comprises at least a protein and/or fragments/fractions thereof, in particular a keratin protein and/or fragments/fractions thereof. In one embodiment, the keratin protein and/or fragments/fractions thereof is obtained from wool, through the deconstruction of wool using a eutectic melt.

The method of preparing a fertiliser and/or soil improver composition according to the second aspect of the present invention may comprise one or more further steps of diluting and/or adjusting the pH of the eutectic melt mixture comprising the one or more organic sources of plant nutrient(s) from the deconstructed one or more biological materials. In one embodiment, the method may comprise a further step of: c) diluting a eutectic mixture comprising the deconstructed one or more biological materials, or comprising the one or more organic sources of plant nutrient(s). In one embodiment, the method comprises a further step of: d) adjusting the pH of the eutectic mixture comprising the deconstructed one or more biological materials, or comprising the one or more organic sources of plant nutrient(s). The order of the steps c) and d) may be alternated, thus step c) may become step d) and step d) may become step c). A method according to the second aspect of the present invention may also comprise a plurality of diluting steps only, a plurality of pH adjusting steps only, or a plurality of diluting and pH adjusting steps (in various orders).

In accordance with a third aspect of the present invention, there is provided a fertiliser and/or soil improver composition prepared according to the method of the second aspect of the present invention, or obtained from the preparation method of the second aspect of the present invention.

In accordance with a fourth aspect of the present invention, there is provided a method of enhancing the growth of plants comprising a step of applying a fertiliser and/or soil improver composition according to the first, or third, aspect of the present invention to plants and/or soil supporting the plants.

In accordance with a fifth aspect of the present invention, there is provided a use of a eutectic melt in the preparation of a fertiliser and/or soil improver composition, comprising the deconstruction of one or more biological materials using the eutectic melt. Preferably, the eutectic melt, or the deconstruction of the one or more biological materials, is according to that defined in the first or second aspect of the present invention.

With the fertiliser and/or soil improver of the present invention, one or more of the following plant growth parameters may be enhanced: plant height, biomass, normalised difference vegetation index (NDVI), root weight, foliage weight and total plant weight.

The deconstruction of the biological material(s) using the eutectic melt as in any of the aspects of the present invention may involve a weight to volume ratio of the biological material(s) to the eutectic melt of from about 1 g:1 ml to about 1 g:100 ml, to about 1g:70ml, 1g:50ml, to about 1g:25ml, or to about 1g:15ml (e.g. a weight to volume ratio of the biological material(s) to the eutectic melt of aboutlg:13.6ml, 1g:10ml, 1g:8ml, 1g:6.1ml, 1g:4.5ml, or 1g:3ml).

In an embodiment of the method according to the fourth aspect of the present invention there is provided a method of enhancing the growth of plants using a fertiliser and/or soil improver composition comprising keratin, keratin fragments/fractions and/or amino acids thereof, which may be obtained through deconstruction of one or more biological materials selected from the group consisting of wool, hair, feathers, horns, hooves, nails, skins, claws, beaks, and combinations thereof.

The method of enhancing the growth of plants according to the fourth aspect of the present invention may comprise the use of the fertiliser and/or soil improver composition according to the first or third aspect of the present invention as an additive to a known fertiliser and/or soil improver.

The method of enhancing the growth of plants may comprise multiple, separate applications of the fertiliser and/or soil improver composition according to the first or third aspect of the present invention to the soil and/or plants.

An application of the fertiliser and/or soil improver composition according to the first or third aspect of the present invention may be as a liquid to a surface of soil, proximal to a location of the plant within that soil.

The method of enhancing the growth of plants according to the fourth aspect of the present invention may comprise an application of the fertiliser and/or soil improver according to the first or third aspect of the present invention as a concentrate, or in a diluted form, to provide a desired % (w/v) or concentration of one or more nutrient(s), e.g. 5 - 50% (w/v) of N, P and/or K, or 10 - 40% (w/v) of N, P and/or K, or 5% (w/v), 12% (w/v), 15% (w/v), 20% (w/v), 27% (w/v), 35%, (w/v), 40% (w/v), or 44% (w/v) of N, P and/or K, for example.

In one embodiment according to the first aspect of the present invention, there may simply be provided a liquid fertiliser and/or soil improver comprising a protein in a eutectic melt. The eutectic melt may comprise choline chloride and urea.

In one embodiment according to the fifth aspect of the present invention, there may simply be a use of a eutectic melt in the preparation of a fertilise and/or soil improver. The eutectic melt may comprise choline chloride and urea.

Throughout the specification, unless the context requires otherwise, the word 'comprise' or variations such as 'comprises' or 'comprising', will be understood to imply the inclusion of a stated integer or group of integers but not the exclusion of any other integer or group of integers.

Furthermore, throughout the specification, unless the context requires otherwise, the word 'include' or variations such as 'includes' or 'including', will be understood to imply the inclusion of a stated integer or group of integers but not the exclusion of any other integer or group of integers.

### BRIEF DESCRIPTION OF DRAWINGS

The present invention will now be described, by way of example, with reference to the accompanying drawings, in which:
Figure 1 is a graph displaying the plant height results according to Example I;
Figure 2 is a graph displaying the plant biomass results according to Example I;
Figure 3 is a graph displaying the NDVI results according to Example I;
Figure 4 is a graph displaying the foliage weight results according to Example I;
Figure 5 is a graph displaying the root weight results according to Example I; and
Figure 6 is a graph displaying the total plant weight results according to Example I.

### DESCRIPTION OF PREFERRED EMBODIMENT

In the present invention, a fertiliser and/or soil improver composition comprises one or more organic sources of plant nutrient(s) obtained through deconstruction of one or more biological materials by a eutectic melt.

The fertiliser and/or soil improver composition according to the present invention is advantageously in a liquid form, which renders the nutrient(s) more accessible/available to plants. Also, the liquid form enables the fertiliser and/or soil improver composition to be provided as a concentrate, or be diluted to provide a desired level/concentration of the nutrient(s) present. Further, being in a liquid form, additional nutrient element(s), if required, may be conveniently added to a fertiliser and/or soil improver composition according to the present invention.

A fertiliser and/or soil improver composition according to the present invention may be applied to soil only to improve or condition the soil before planting, and/or applied at a frequency required after planting.

A eutectic melt according to the present invention comprises deep eutectic solvents, with the melting point of the solvent mixture at a temperature significantly lower than the melting point of the individual eutectic solvent components, due to charge delocalisation through hydrogen bond formation.

It is not known to date of a fertiliser and/or soil improver composition comprising one or more organic sources of plant nutrient(s) (which may be one or more organic sources of nitrogen, or one or more organic nitrogen sources) prepared through deconstruction of one or more biological materials by a eutectic melt, as in any of the aspects of the present invention.

A eutectic melt in any of the aspects of the present invention may comprise a quaternary ammonium salt (such as a choline salt) and a urea, thiourea, or a derivative thereof. Other deep eutectic solvents, particularly those involving a choline salt, may also be used, for example, a choline salt-polyol eutectic system (such as choline chloride and glycerol), or a choline salt-organic acid eutectic system (such as choline chloride and malonic acid). More preferably, a choline halide (such as choline chloride or choline bromide) and a urea/urea derivative or thiourea/thiourea derivative based eutectic system is used in the present invention. In a specific embodiment, a choline chloride-urea eutectic melt or system is used in the present invention.

A eutectic melt according to the present invention may be used to deconstruct one or more biological materials to provide one or more organic sources of plant nutrient(s). The term "organic source", "organic nutrient source", "organic plant nutrient source", or variations thereof, as used herein refers to an organic compound or molecule capable of providing/supplying one or more plant nutrients (as opposed to an inorganic nutrient source), or at least providing/supplying one or more of the major plant nutrients N, P and K. In a preferred embodiment, the organic source of plant nutrient(s) may be an organic source of nitrogen/organic nitrogen source, including one which provides/supplies predominantly nitrogen but may also provide/supply one or more of other plant nutrients. In a preferred embodiment, the one or more organic sources is in the form of one or more biomolecules. The term "biomolecule" as used herein refers to a molecule present in an organism and capable of contributing to a biological process (e.g. signal transduction, cell division or formation etc.) in the organism. In a preferred embodiment, the one or more biomolecules may be selected from the group consisting of proteins, peptides, chitins, amino acids, nucleic acids, and combinations thereof. In a further preferred embodiment, the one or more biomolecules is selected from the group consisting of proteins, peptides, protein or peptide fragments/fractions, amino acids, and combinations thereof, as the, or the predominant, organic source(s) of nitrogen.

In an embodiment according to any of the aspects of the present invention, a eutectic melt is preferably used to deconstruct one or more biological materials to provide one or more organic sources of plant nutrient(s) in the form of one or more biomolecules. The one or more biological materials is selected from the group consisting of wool, hair, feathers, horns, hooves, nails, skins, claws, beaks, and combinations thereof. The one or more organic sources of plant nutrients is one or more organic nitrogen sources (but may also include other plant nutrient sources, e.g. organic phosphorus or potassium sources). The one or more biomolecules is selected from the group consisting of proteins, peptides, protein/peptide fragments/fractions, amino acids, and/or combinations thereof. In a further embodiment, the one or more biomolecules may be selected from the group consisting of at least one protein, fragments/fractions of the protein(s) including peptide and/or amino acid fragments/fractions of the protein(s), and combinations thereof.

Many natural materials from an animal source (including a human animal source) are normally discarded or perceived as waste materials. Advantageously, a eutectic melt according to the present invention is able to break down such materials, to provide one or more organic plant nutrient sources, such as one or more biomolecules selected from the group consisting of proteins, peptides, amino acids, and/or combinations thereof, which are at least capable of acting as one or more organic nitrogen sources.

Keratin is a fibrous structural protein naturally occurring in epithelial cells. There are two varieties of keratin fibres, being α-keratins found in hair and wool etc. and β-keratins, which are harder and are found in such material as nails and beaks. Being a protein, keratin comprises nitrogen from the amino acids which form its structure. The activity of nitrogen on plant growth is well known.

It has presently been found that compositions comprising the keratin protein and/or its fragments/fractions, including that obtained from wool extracts, possess marked biological stimulant activity and have consequently proved effective as an organic nitrogen source and hence a fertiliser and/or soil improver, or an additive to a fertiliser and/or soil improver, for enhanced plant growth.

Advantageously, a eutectic melt as in any of the aspects of the present invention is able to deconstruct one or more biological materials comprising keratin, or a significant portion of keratin, as a structural protein. In a preferred embodiment, the one or more biological materials may be selected from the group consisting of wool, hair, feathers, horns, hooves, nails, skins, claws, beaks, and combinations thereof. These biological materials may originate from a human and/or non-human animal source. It is known that these biological materials comprise keratin only, or a significant portion of keratin, in the structural makeup of the material. With a eutectic melt according to the present invention being capable of deconstructing a hard/rigid protein such as keratin, the present eutectic melt, or deconstruction method, may also be used to deconstruct other proteins, at least those with a similar or less hard/rigid structure compared to keratin. Therefore, in one embodiment, there may simply be a fertiliser and/or soil improver composition comprising a protein in a eutectic melt.

In a preferred embodiment of the present invention, wool from sheep is deconstructed to obtain the keratin protein, peptide fragments, and/or amino acids thereof, available for uptake by plants, thereby providing one or more organic nitrogen source to plants. This wool extract has demonstrated fertiliser and/or soil improver activity itself or as an additive to fertiliser and/or soil improver. In other embodiments, wool from other animals (e.g. Alpaca, Llama, goats or rabbits) may also be deconstructed by an eutectic melt according to the present invention, to provide a fertiliser and/or soil improver composition.

Advantageously, in deconstructing wool, the present inventor found that wool may be used as is, i.e. uncleaned and/or with wool fat present. This presents a significant commercial advantage in a commercial production of a fertiliser and/or soil improver composition prepared from sheep wool.

In a preferred embodiment, the preparation of an eutectic melt comprises fabrication of keratin through deconstruction of sheep's wool using a benign choline chloride-urea deep eutectic solvent melt. The eutectic melt may be formulated by mixing choline chloride and urea at a molar ratio of between about 20:1 and 1:20 while heating for a number of minutes, or for hours (depending on the scale of production). Wool is then dissolved in the eutectic melt at a weight to volume ratio of between about 1 g:1 ml and about 1 g:100 ml (preferably between about 1g:1ml and about 1g:25ml, more preferably between about 1g:1ml and about 1g:15ml, or even between about 1g:1m and about 1g:10ml, e.g. about 1g:9ml, 1g:8ml or 1g:6.5ml) using heat. Processing wool in this way does not destroy the organic content of the material.

The heating step of the above process would be understood by the skilled person to cause conversion of at least some of the urea content to ammonia. The resultant ammonia gas escapes to the atmosphere, thereby reducing the nitrogen content of the mixture. A pungent smell is also observable, due to the presence of this ammonia.

The following examples utilise the 'urea + choline chloride' solvent mix and sheep's wool to illustrate a eutectic melt according to the present invention, its preparation, the deconstruction of a biological material through a eutectic melt and effectiveness of the resultant fertiliser/soil improver composition according to the present invention.

### Example I - Temperature effect on the eutectic melt and/or deconstruction of wool

Firstly, a eutectic melt is prepared by heating urea (20 g, 0.33 mol) and choline chloride (23.2 g, 0.17 mol) at 70 °C until a clear solution was formed. For each temperature study, the eutectic melt is then further heated until 110 °C, 140 °C, 170 °C and 200 °C. When the desired temperature is reached, unwashed/uncleaned wool (1g) was added portion-wise to the eutectic melt over a 2-minute period. The resulting mixture was then continued to be heated at the desired temperature (110 °C, 140 °C, 170 °C, or 200 °C) with stirring, preferably until the wool is fully dissolved. The mixture was then cooled to room temperature, diluted with water (15 ml), stirred for 5 to 30 minutes, then filtered or centrifuged to afford a clear solution comprising the deconstructed/solubilized wool, in the form of keratin protein and fragments/fractions thereof (with the clear solution being a fertiliser and/or soil improver composition in accordance with the first or third aspect of the present invention). Any undissolved wool present is dried and weighted. The filtered solution, or supernatant solution, was kept at room temperature for several weeks to observe for storage stability of the solution (e.g. whether there was precipitate formation).

The results of the temperature study showed that, surprisingly, there is a distinct temperature range within which: i) the wool would reach complete dissolution within a reasonable timeframe; and ii) the deconstructed components of the wool and components of the eutectic melt, would remain in solution without precipitation over time.

At a temperature of 110 °C, despite continuingly heating the eutectic melt at this temperature for 5 hours with stirring, ~75% of the wool remain undissolved. Surprising also, at the elevated temperature of 200 °C, copious amounts of a precipitate also formed after the solution containing the dissolved/deconstructed wool was cooled to room temperature and diluted with water (15 ml). Even when the precipitate was removed by centrifugation, the remaining clear supernatant solution had precipitate forming over the several days after the centrifugation. A subsequent analysis of a sample of the precipitate from the centrifugation by NMR confirmed that the precipitate is a result of urea decomposition, with the urea decomposition pathway not being activated at a lower temperature, but at 200 °C, or more likely within the temperature range of 170 °C - 200 °C. The NMR analysis indicates the formation of multiple decomposition products of urea at 200 °C, including biuret, triuret, ammelide and cyanuric acid, some of which may have formed within the temperature range of 170 °C -200 °C.

From this study, a temperature range of 140 °C - 170 °C may be used for the eutectic deconstruction of the wool. However, eutectic deconstruction at 140 °C of 1 g of wool still required a timeframe of approximately 2 hours, which would not be commercially appropriate or economically viable for scaled-up productions. At 170 °C, the wool appeared to be fully dissolved after heating at this temperature for 15 minutes; however, the energy input for heating the eutectic melt up to 170 °C would not be economical/viable for commercial scale productions. Therefore, a temperature for the eutectic deconstruction of a biological material containing keratin protein is preferably in the range of approximately 145 - 165 °C, or more preferably approximately 145 - 160 °C.

### Example II - Effect of the HBD:HBA molar ratio on the eutectic melt

The above temperature effect study was conducted in a eutectic melt comprising urea (20 g, 0.33 mol) and choline chloride (23.2 g, 0.17 mol), i.e. with a HBD:HBA ratio of 2:1, which is the conventional ratio for a eutectic melt involving urea and choline chloride, in order to achieve a eutectic melt.

The present inventor found that a eutectic melt can also be achieved at a HBD:HBA molar ratio higher than 2:1. In the instance of urea:choline chloride, the present inventor surprisingly found that even at a HBD:HBA molar ratio in a range of from about 7.5:1 to about 4:1, a eutectic melt is still achievable. This was unexpected and would be commercially advantageous, as a significantly less amount of choline chloride, which is considerably more expensive than urea, may be used for the eutectic deconstruction.

At a urea:choline chloride molar ratio of 8:1 or higher (e.g. at the molar ratios of 9:1 and 10:1), a significant proportion, or even the bulk of the eutectic solvents, remains in a solid form even when heated at approximately 100 °C for 30 minutes, thus a molar ratio range of urea:choline chloride which presents a significant commercial advantage and yet is able to achieve a eutectic melt to ensure proper mixing, wetting and dissolution of the biological material(s) is from about 7.5:1 to about 4:1.

### Example III - Preparation of a preferred embodiment of a fertiliser and/or soil improver composition according to the present invention

In this Example, a fertiliser and/or soil composition according to the present invention is prepared by a method including at least the steps of:
a) forming a eutectic melt; and
b) deconstructing one or more biological materials selected from the group consisting of wool, hair, feathers, horns, hooves, nails, skins, claws, beaks, and combinations thereof using the eutectic melt, to obtain one or more organic nitrogen sources.

Step a) may include heating deep eutectic solvents until a eutectic melt is formed.

The eutectic solvents preferably comprise a HBA selected from a choline salt (e.g. choline chloride, choline bromide or choline acetate) and a HBD selected urea, a urea derivative, thiourea, a thiourea derivative, and combinations thereof.

The HBD:HBA molar ratio of the eutectic solvents may be in a ratio of about 10:1 to about 1:10, but preferably in a ratio of from about 8:1 to about 3:1, or from about 7.5:1 to about 4:1.

In step b), the deconstruction is preferably at a temperature in a range of approximately 145 - 165 °C, or in a range of approximately 145 - 160 °C (e.g. 147 °C, 150 °C, 156°C or 160 °C). The organic nitrogen sources is preferably a keratin protein, or fragments thereof (such as peptide fragments, but there may also be amino acid fragments).

The preparation method may comprise a step of diluting a eutectic melt mixture comprising the one or more organic nitrogen sources, e.g. with water, or a liquid comprising one or more plant nutrients (such as a nutrient solution or an existing fertiliser solution in absence of nitrogen, or needing additional nitrogen).

The preparation method may also comprise a step of adjusting the pH of the fertiliser and/or soil improver composition prepared to a desired pH range, for example, pH 5.4 - 7.5, or more preferably pH 5.5 - 7 (e.g. pH 5.8, 6.2, 6.5 or 7). If pH adjustment is required, preferably a natural organic acid is used for the pH adjustment. Exemplary acids include oxalic, malonic, succinic, tartaric and citric acid.

The dilution and pH adjustment steps can either be steps c) and d), or d) and c), i.e. the order of the steps may change, and there may also be additional, or alternating, dilution and/or pH adjustment steps.

Advantageously, the present inventor found that, with the fertiliser and/or soil improver composition preparation method of the present invention, a biological material such as wool can be used as is in an uncleaned state, without the need to remove the wool fat (or a fat layer) first. This was both unexpected and has a clear commercial advantage of reducing the preparation of the one or more biological materials before the eutectic deconstruction.

### Example IV - Molecular weight/fragmentation characterization of the one or more biological molecules in a fertiliser and/or soil improver composition according to the present invention

Molecular weight/fragmentation analysis is performed on a fertiliser and/or soil improver composition (nV-1) prepared using a method exemplified in Example III, with a sheep wool material being deconstructed using a eutectic melt comprising urea:choline chloride at a ratio in the range of from about 7.5:1 to about 4:1, and with the temperature for the deconstruction of wool being in a range of approximately 145 - 165 °C (or more specifically approximately 145 - 160 °C).

Firstly, the molecular weight/fragmentation of a sample composition nV-1 according to the present invention is studied by Sodium dodecyl-sulfate polyacrylamide gel electrophoresis (SDS-PAGE). For SDS-PAGE, 1 mL of composition nV-1 was desalted by diafiltration using an Amicon Ultra-0.5 mL 3-kDa Centrifugal Filter (Merck-Millipore) following the manufacturer's instruction. The desalted sample was mixed either with an equal volume of non-reducing SDS-PAGE loading buffer or with an equal volume of reducing buffer (containing 30 mM DTT and 3 mM EDTA). Samples were heated for 10 minutes at 90°C, before resolving on a precast gel (SurePAGETM 8-16% Bis-Tris by GenScript) running with MES Buffer at 200 volts for 25 minutes. Gels were stained by a Coomassie Blue R250 solution, before scanning on a GS- 900 calibrated densitometer (Bio-Rad). All Blue Precision Plus Protein standard (Bio-Rad) was used as the molecular weight marker.

Equivalent to 1, 5, 25 and 75 µL of sample composition nV-1 (expected to contain 20, 100, 500 and 1500 µg of kertain protein) were resolved by SDS-PAGE.

Surprisingly, the SDS-PAGE results suggest that composition nV-1 contains far less than expected keratin proteins in the -10 to 150 kDa range from the deconstruction of wool. This is completely unexpected, given that the temperature of deconstruction was lower than 160 °C.

Almost all the detected protein bands in the gel appear to accumulate at around the 10 kDa mark, thus suggesting that deconstruction of the wool has mainly resulted in keratin peptide fragments, although there were amino acid fragments detected by SDS-PAGE at <10 kDa. No apparent difference is detectable between the reduced and non-reduced samples.

With the above surprising finding, and to shed more light on the size distribution of the peptides in the sample fertiliser and/or soil improver composition nV-1, a small sample of nV-1 was desalted and analysed by a MALDI mass spectrometer. Two different matrices, sinapinic acid (that is more suitable for proteins) and CHCA (more apt for small peptides) were used. Both matrices produced similar profiles (not shown).

Using the mass spectrum obtained from the CHCA matrix as an example, the spectrum (in the mass range of 500 to 10,000 m/z) showed that nearly all the keratin peptide fragments appear to be in the 1000-4000 Dalton range (i.e. < 5 kDa). It should be noted that all desalting methods readily remove the smaller peptide fragments or amino acids (of <1000 kDa) that are likely to be present in the sample.

### Example V - Biological activity (pot trial)

A fertiliser and/or soil improver composition according to the invention was tested on potted Grosse Lisse tomatoes to evaluate plant growth. Treatments applied were Verigrow-1: choline chloride (2 moles) + urea (1 mole), without heating; Verigrow-2: choline chloride (2 moles) + urea (1 mole), with heating; and Verigrow-3: choline chloride (2 moles) + urea (1 mole) + wool, with heating (to fully dissolve the wool at a temperature that may be in the range of 170 - 200 °C); each prepared as 1:10 dilutions with water and at 5.4, 10.8 and 21.6 mL/plant (pot); as well as a commercially available seaweed plant treatment (Seasol^{®}) at 141.3 mL/plant. Treatments were applied as either a double application, at transplanting (3-4 leaves on main stem) and 29 days later at 50% inflorescence emergence, or as a single application at 50% inflorescence emergence. The term Verigrow, as used herein, refers to the 3 test samples (Verigrow -1, Verigrow -2 and Verigrow-3) for this study. Also for this study, Verigrow-3 was at a weight to volume ratio of the wool to eutectic melt in the range of about 1g:1 ml to about 1g:50ml.

The chronology of events and treatments are shown below in Tables 1 and 2 respectively.

**Table 1: Chronology of events.**

| **Date** | **Days after application A&B** | **Crop stage** | | **Event** |
|---|---|---|---|---|
| | | **BBCH scale** | **Description** | |
| 06/12/16 | -1 | 13-14 | 3 to 4 leaves on the main stem | Seedlings transplanted into pots |
| | -30 | | | |
| 07/12/16 | 0 | 13-14 | 3 to 4 leaves on the main stem | Application A |
| | -29 | | | |
| 21/12/16 | 14 | 14-16 | 4 to 6 leaves on the main stem | Plant height, biomass and NDVI assessments |
| | -15 | | | |
| 03/01/17 | 27 | 15-55 | 5 leaves on main stem to 50% inflorescence emerged | Plant height, biomass and NDVI assessments |
| | -2 | | | |
| 05/01/17 | 29 | 15-55 | 5 leaves on main stem to 50% inflorescence emerged | Application B |
| | 0 | | | |
| 11/01/17 | 35 | 15-61 | 5 leaves on main stem to start of flowering | Plant height, biomass and NDVI assessments |
| | 6 | | | |
| 18/01/17 | 42 | 15-63 | 5 leaves on main stem to 30% of flowers open | Plant height, biomass and NDVI assessments |
| | 13 | | | |
| 01/02/17 | 56 | 16-65 | 6 leaves on main stem to 50% of flowers open | Plant height, biomass and NDVI assessments |
| | 27 | | | |
| 07/02/17 | 62 | 16-65 | 6 leaves on main stem to 50% of flowers open | Plant weight assessment |
| | 33 | | | |

**Table 2: Treatments (Verigrow compositions: 150 mL/1.5 L of water; seaweed treatments: 6.67 mL/2 L of water).**

| **No.** | **Treatment** | **Rate** | | **Application schedule** |
|---|---|---|---|---|
| | | **Diluted mix (mL/200 mm pot)** | **Active ingredient (mL/pot)** | |
| 1 | Verigrow-1 | 5.4 | - | AB |
| 2 | Verigrow-1 | 10.8 | - | AB |
| 3 | Verigrow-1 | 21.6 | - | AB |
| 4 | Verigrow-2 | 5.4 | - | AB |
| 5 | Verigrow-2 | 10.8 | - | AB |
| 6 | Verigrow-2 | 21.6 | - | AB |
| 7 | Verigrow-3 | 5.4 | - | AB |
| 8 | Verigrow-3 | 10.8 | - | AB |
| 9 | Verigrow-3 | 21.6 | - | AB |
| 10 | Verigrow-1 | 5.4 | - | B |
| 11 | Verigrow-1 | 10.8 | - | B |
| 12 | Verigrow-1 | 21.6 | - | B |
| 13 | Verigrow-2 | 5.4 | - | B |
| 14 | Verigrow-2 | 10.8 | - | B |
| 15 | Verigrow-2 | 21.6 | - | B |
| 16 | Verigrow-3 | 5.4 | - | B |
| 17 | Verigrow-3 | 10.8 | - | B |
| 18 | Verigrow-3 | 21.6 | - | B |
| 19 | Untreated control | nil | nil | - |
| 20 | Untreated control | nil | nil | - |
| 21 | Seaweed treatment | 141.3 | - | AB |
| 22 | Seaweed treatment | 141.3 | - | B |

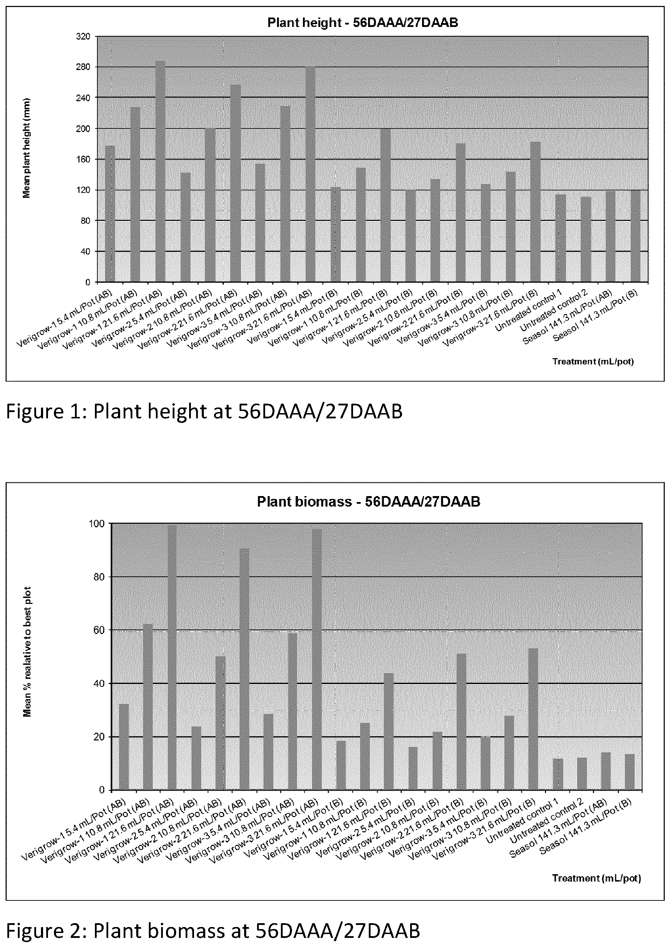

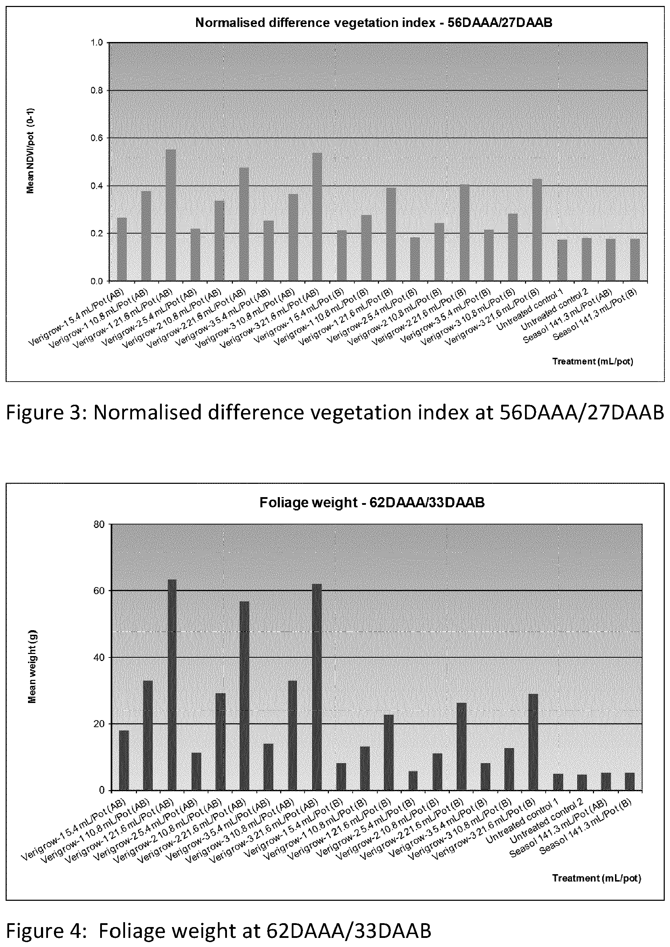

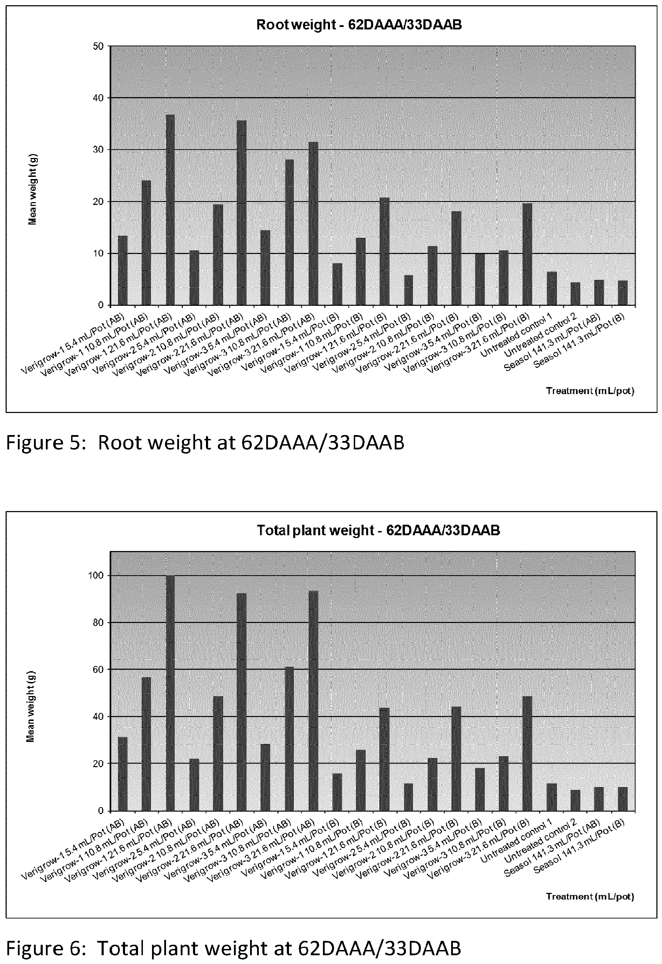

The results are shown in Figures 1 to 6 at various days after applications A or B (DAAA or DAAB).

Plant height, biomass, normalised difference vegetation index (NDVI) and weights (root and foliage) were measured and all factors were significantly increased by all three Verigrow compositions, with a significant dose response to increasing rates of all Verigrow compositions. Double applications of Verigrow compositions provided greater increases in plant height, biomass, NDVI and weights (root and foliage) than single applications. Single and double applications of the seaweed plant treatment were not significantly different to the untreated control in plant height, biomass, NDVI or weights (root and foliage).

These results confirm that nitrogen is lost through the heating of the eutectic melt, as evidenced by the superior results achieved by Verigrow-1 when compared with Verigrow-2. However, the results achieved by Verigrow-3, being the composition comprising keratin were similar to those of the unheated mixture and hence additional nitrogen was available for the plants, despite the heating process.

### Example VI - Biological activity (field wheat trial)

A fertiliser and/or soil improver composition (nV-2) is prepared using a method exemplified in Example III, with a sheep wool material (uncleaned and/or containing the fat layer) being deconstructed using a eutectic melt comprising urea:choline chloride at a ratio in the range of from about 7.5:1 to about 4:1, and with the temperature for the deconstruction of wool being in a range of approximately 145 - 165 °C (or more specifically approximately 145 - 160 °C). The composition (nV-2) was also prepared at a weight to volume ratio of the wool to eutectic melt in the range of from about 1g:1ml to about 1g:25 ml.

The resultant fertiliser and/or soil improver composition (nV-2) comprises 35% (w/v) of total N (nitrogen) and has pH in the range of pH 5.5 - 6.5. For the field application, the composition nV-2 was mixed with water (as a carrier) in a ratio of approximately 52 L water to approximately 48 L of nV-2.

The field wheat trial was established as a randomised complete block of 5 treatments and 4 replicates in a single bank with each plot 12 meter long by 2 meter wide.

The effectiveness of the fertiliser and/or soil improver composition nV-2 according to the present invention on plant growth (wheat in this instance) and/or as an organic nitrogen nutrient source, is compared with a commercial inorganic fertiliser (Flexi-N, which is a commercially available fertiliser distributed by the Australian Company CSBP and contains three forms of N - urea, ammonium and nitrate, with a total N concentration of 42%), and with Urea alone (at 46% total N).

Treatments containing 17 units of N were applied either as nV-2 at 35% (w/v) N, Flexi-N at 42% (w/v) N or Urea at 46% (w/v) N. The nV-2 and Flexi-N treatments were liquid banded in-furrow at seeding whilst Urea treatment was top-dressed and incorporated by sowing. All plots were sown to Sceptre wheat at a rate of 91 kg/ha to a depth of 2.5 cm.

At 43 days after sowing, there was a second application of the Flexi-N and Urea treatments providing a further 42 units of N each, to the plots of these treatments.

At 41 and 75 days after sowing, the NDVI was recorded for each plot using a hand-held green-seeker.

At 209 days after sowing, the trial was plot harvested for yield comparisons with grain samples collected from each plot and analysed for quality (protein, moisture, specific weight and screenings) according to industry standards.

All data collected was statistically analysed with the proprietary agricultural field research program ARM^{®} using an Analysis of Variance at a confidence limit of 95%.

The results of the field wheat trial is shown below

**Table 3: Results of the field wheat trial**

| Treatment type | NO treatment | nV-2 (35% N) | Flexi-N (42% N) | Urea (46% N) |
|---|---|---|---|---|
| Average crop yield | 7.323 | 8.008 | 7.840 | 7.848 |
| Total Nitrogen units applied in trial | - | 17 | 59 | 59 |
| Average crop yield/Unit of N | - | 0.471 | 0.133 | 0.133 |
| Net crop yield/ unit of N | - | 0.040 | 0.009 | 0.009 |

It can be seen that the nV-2 fertiliser and/or soil improver composition is superior in performance compared to the commercial inorganic nitrogen fertiliser Flexi-N and to Urea. In this field trial, 17 units of N applied as nV-2 (35% N) in-furrow at seeding was equal to or even better than 59 units of N supplied by Flexi-N (42% N) or Urea (46% N) on the growth, yield and grain quality of Scepter wheat. The results show that per unit of N, the nV-2 fertiliser and/or soil improver composition according to the present invention had a net crop yield that was ~ 4.5 times higher than that of Flexi-N and Urea. With the superior bioavailability of the nitrogen nutrient in a fertiliser and/or soil improver composition according to the present invention, even at a nitrogen concentration significantly less than 35% (w/v) total N (e.g. at a centration in the range of from 10% (w/v) to 35% (w/v), 10% (w/v) to 30% (w/v), or even 10% (w/v) to 25% (w/v) total N), such as 12% (w/v), 15% (w/v), 17.5% (w/v), 20% (w/v), 22.4% (w/v), 25% (w/v), 28%(w/v), or 30% (w/v) total N), the composition according to the present invention may still be more effective than, or at least similarly effective to, a commercial, inorganic and/or urea nitrogen fertiliser.

As has been previously shown, organic nitrogen is available to plants in the form of protein or as amino acids. The effect of treating wool using a eutectic melt according to the present invention means that the resulting keratin protein, and fragments/fractions thereof (such as peptides and amino acids), are bioavailable, or even surprisingly highly bioavailable, as an organic nitrogen source. This nitrogen can be accessed by plants through root uptake in the form of the protein itself via endocytosis, or as simpler amino acids resulting from enzymatic digestion (either by the proteolytic activity of the roots or from microbes present in the soil).

The present invention has been found to possess a myriad of advantages over inorganic nitrogen sources, including a longer durability. Further, protein, or fragments/fractions thereof, as a nitrogen source results in an increase in a plant's ability to develop a more extensive root network. It is understood that the keratin protein, or fragments/fractions thereof, available from the present composition through the deconstruction of wool, is bioavailable, or even highly bioavailable, as an organic nitrogen source available to plants. The present invention additionally provides the advantages of being an avenue for reducing or eliminating wool waste and also serving as an additional income stream for wool producers. Since other biomaterials such as those mentioned earlier (e.g. feathers, hair, hooves etc.) all comprise keratin or predominantly keratin as a structural protein, an eutectic melt according to the present invention is at least able to be used to deconstruct such biomaterials, thus turning further waste materials into income streams and environmentally friendly and effective organic sources of plant nutrients.

Modifications and variations as would be apparent to a skilled addressee are deemed to be within the scope of the present invention.

## Claims

1. A fertiliser and/or soil improver composition for use in enhancing the growth of plants, the composition comprising one or more organic sources of plant nutrient(s), obtained through deconstruction of one or more biological materials by a eutectic melt.

2. A fertiliser and/or soil improver composition according to claim 1, wherein the one or more organic sources of plant nutrient(s) is obtained from one or more biological materials selected from the group consisting of wool, hair, feathers, horns, hooves, nails, skins, claws, beaks, and combinations thereof.

3. A fertiliser and/or soil improver composition according to any one of the preceding claims, wherein the one or more organic sources of plant nutrient(s) is one or more organic sources of nitrogen.

4. A fertiliser and/or soil improver composition according to claim 3, wherein the one or more organic sources of nitrogen is in the form of one or more biomolecules selected from the group consisting of proteins, peptides, amino acids, and combinations thereof.

5. A fertiliser and/or soil improver composition according to claim 4, wherein the one or more biomolecules is selected from the group consisting of keratin, keratin peptide fragments, amino acids, and combinations thereof.

6. A fertiliser and/or soil improver composition according to any one of the preceding claims, wherein the eutectic melt comprises a hydrogen bond acceptor (HBA) in the form of a choline salt and a hydrogen bond donor (HBD) in the form of urea, thiourea, a derivative of urea or thiourea, and combinations thereof.

7. A fertiliser and/or soil improver composition according to any one of the preceding claims, wherein the deconstruction of one or more biological materials by a eutectic melt is at a temperature of approximately 145 - 165°C.

8. A fertiliser and/or soil improver composition according to anyone of the preceding claims, wherein a molar ratio of HBA:HBD is from about 8:1 to about 3:1.

9. A method of preparing a fertiliser and/or soil improver composition comprising one or more organic sources of plant nutrient(s), the method comprising the steps of:
a) forming a eutectic melt; and
b) deconstructing one or more biological materials using the eutectic melt, to obtain the one or more organic sources of plant nutrient(s).

10. A method according to claim 9, the one or more organic sources of plant nutrient(s) is obtained from one or more biological materials selected from the group consisting of wool, hair, feathers, horns, hooves, nails, skins, claws, beaks, and combinations thereof.

11. A method according to claim 9 or 10, wherein the one or more organic sources of plant nutrient(s) is one or more organic sources of nitrogen.

12. A method according to any one of claims 9 to 11, wherein the one or more biomolecules is selected from the group consisting of keratin, keratin peptide fragments, amino acids, and combinations thereof.

13. A method according to any one of claims 9 to 12, wherein the eutectic melt comprises a hydrogen bond acceptor (HBA) in the form of a choline salt and a hydrogen bond donor (HBD) in the form of urea, thiourea, a derivative of urea or thiourea, and combinations thereof.

14. A method according to any one of claims 9 to 13, wherein the deconstruction of one or more biological materials by a eutectic melt is at a temperature of approximately 145 - 165°C.

15. A method according to any one of claims 9 to 14, wherein a molar ratio of HBA:HBD is from about 8:1 to about 3:1.
